# EUROPEAN PATENT SPECIFICATION

(11) **EP 2 868 564 B1**
(45) Date of publication and mention of the grant of the patent: **18.09.2019**
(21) Application number: 14191267.5
(22) Date of filing: 31.10.2014
(51) Int. Cl.: B62M 6/70, B62J 6/02, B62K 23/02

(54) **Electrically assisted bicycle**
Fahrrad mit elektrischem Hilfsmotor
Bicyclette assistée électriquement

(30) Priority: 01.11.2013 JP 2013228819
(43) Date of publication of application: 06.05.2015
(73) Proprietor: Yamaha Hatsudoki Kabushiki Kaisha, Iwata-shi, Shizuoka 438-8501 (JP)
(72) Inventor: Nozawa, Shinjiro, Iwata-shi, Shizuoka 438-8501 (JP); Katayama, Satoshi, Iwata-shi, Shizuoka 438-8501 (JP)
(74) Representative: Grünecker Patent- und Rechtsanwälte PartG mbB

(56) References cited:
- EP-A1- 2 599 707
- EP-A2- 1 564 122
- EP-A2- 2 562 027
- JP-A- 2002 274 459
- US-B1- 6 204 752
- US-B2- 7 410 278

## Description

### BACKGROUND OF THE INVENTION

### Field of the Invention

The present invention relates to electrically assisted bicycles, and more specifically to an electrically assisted bicycle having a so called auto-light function (automatic headlight ON/OFF function) for automatically turning ON/OFF a headlight based on illumination in the surrounding environment.

### Description of the Related Art

JP-A 2002-274459 discloses a lighting device for bicycles which includes an electrical power source provided by a hub dynamo, a headlight housed in a light case, and an illumination detection circuit disposed therebetween for detection of ambient illumination. The device automatically turns ON the headlight when surrounds become dark while turning it OFF when surrounds become bright. The lighting device for bicycles also includes a switch case (separate case) which is attached to the bicycle's handlebar separately from the light case and incorporates therein an optical sensor and an illumination detection circuit. The switch case is composed of an upper case and a lower case which are screwed together. The lower case has a light-receiving window to allow ambient light to reach the optical sensor.

If the lighting device for bicycles according to JP-A 2002-274459 is applied to an electrically assisted bicycle, ambient light will come from below since the light-receiving window according to JP-A 2002-274459 is formed in the lower case, and this causes a problem that the device will be affected by such a factor as light reflectivity of the handlebar. As a result, the device is unable to stably allow ambient light to enter from the light-receiving window and reach the optical sensor. The optical sensor becomes unable to make accurate detection of the ambient illumination; or in other words, the device is susceptible to noise.

Further, if handle covers are placed around grips of the handlebar, the light-receiving window which is formed in the lower case is masked by one of the handle covers, and becomes impossible to appropriately allow ambient light to reach the optical sensor. In this case, detection accuracy of the optical sensor is even lower, and the device becomes more susceptible to noise.

In addition, if the device has a display/operation section which has a display section and an operation section formed on an upper surface, and if this display/operation section is attached to the handlebar, it is desirable that a special handle cover which has a transparent window for viewing the display section is used if covers are attached to the handlebar. However, application of the technique according to JP-A 2002-274459 to this particular display/operation section still results in the same problem that the light-receiving window is masked by the handle cover since the light-receiving window is formed in the lower surface of the display/operation section. Therefore, it is impossible to allow ambient light to appropriately reach the optical sensor, and hence it is impossible to accurately detect the ambient illumination.

Further prior art is known from document EP 2562027 A2, which discloses the preamble of claim 1.

### SUMMARY OF THE INVENTION

Therefore, a primary object of the present invention is to provide an electrically assisted bicycle capable of accurately detecting illumination in the surrounding environment in an arrangement that an operation device attached to the handlebar has a light-receiving window and an illumination detection section. Such an object is achieved by an electrically assisted bicycle according to claim 1.

In the present teaching, the light-receiving window for allowing ambient light (outside light) to enter is provided in the operation surface of the operation device (device main body) in a manner that the operation surface does not face the handlebar. Therefore, the device can receive light easily without being affected by such a factor as light reflectivity of the handlebar, unlike in the arrangement where the light-receiving window is formed in the lower surface. Also, the light-receiving window is on a side closer to the stem than is the center-of-gravity point of the operation surface in the axial direction of the handlebar at a place where the mounting portion is attached, i.e., the light-receiving window is far from the grip of the handlebar. Therefore, even in cases where a handle cover is attached to the grip of the handlebar, the light traveling to the light-receiving window is not very much affected by the handle cover, so it is possible to appropriately catch the ambient light. Hence, the illumination detection section can accurately detect ambient illumination, the arrangement reduces influence of noise, making it possible to avoid untimely turning of the headlight caused by disturbance. Therefore, it is possible to accurately detect illumination in the surrounding environment in an arrangement where an operation device attached to a handlebar includes a light-receiving window and an illumination detection section.

Preferably, the electrically assisted bicycle further includes a saddle provided at a more rearward position than the handlebar, and when viewed from a direction vertical to the operation surface, the light-receiving window and the saddle are on mutually opposed sides of an imaginary line segment which passes the center-of-gravity point and extends in an axal direction of the handlebar at a location where the mounting portion is attached. Specifically, the light-receiving window is on a side closer to the stem than is the center-of-gravity point of the operation surface, and further, when viewed from a direction which is vertical to the operation surface, the light-receiving window and the saddle are on the mutually opposed sides of the imaginary line segment. The position of the light-receiving window as described above belongs to a region which is not very likely to be passed by the rider's finger(s) when he/she operates the operation device. Therefore, the light entering the light-receiving window is not very much affected by the finger(s). Thus, the illumination detection section can accurately detect ambient illumination, the arrangement reduces influence of noise, making it possible to avoid untimely turning of the headlight caused by disturbance.

Further preferably, at least part of the light-receiving window is on a side closer to the stem than is the operation section. In this case, it is possible to position the light-receiving window at a place which is even less likely to be passed by the rider's finger(s) when he/she operates the operation device, so the arrangement prevents the light-receiving window from being completely blocked by the rider's finger(s). Therefore, the arrangement allows the illumination detection section to detect ambient illumination at a higher accuracy.

Further, preferably, the operation device is provided by a display/operation device which further includes a display section. In an arrangement as described above, where the operation device is provided by a display/operation device, it is essential that a handle cover has a transparent region correspondingly to the display section in order to make the display section visible. Typically, a portion of the handle cover which is close to the grip is made of a cloth so as to protect the rider's hand from cold temperatures, injuries, etc., whereas a portion of the handle cover which is close to the stem is made of a transparent member such as vinyl so that the display section is visible. According to the present teaching, the light-receiving window is formed in the operation surface of the operation device and is on a side closer to the stem than is the center-of-gravity point of the operation surface. This makes it easy to position the light-receiving window correspondingly to the transparent member. The light-receiving window is not very much affected by the handle cover, is capable of receiving ambient light appropriately, and the illumination detection section can detect ambient illumination accurately. As described, the present teaching can be suitably utilized when a handle cover has a transparent member at a position corresponding to the display section.

It should be noted here that the "center-of-gravity point of the operation surface" refers to a geographic center of gravity of the operation surface.

The above-described object and other objects, characteristics, aspects and advantages of the present invention will become clearer from the following detailed description of embodiments of the present invention to be made with reference to the attached drawings.

### BRIEF DESCRIPTION OF THE DRAWINGS

Fig. 1 is a right-hand side view of an electrically assisted bicycle according to an embodiment of the present invention.
Fig. 2 is a block diagram showing primary constituent parts of the electrically assisted bicycle in Fig. 1.
Fig. 3 is an illustrative drawing showing a handlebar of the electrically assisted bicycle in Fig. 1 and surroundings thereof.
Fig. 4 is a partially unillustrated plan view showing the handlebar and a display/operation device.
Fig. 5 is a partially unillustrated rear view showing the handlebar and the display/operation device.
Fig. 6 an illustrative drawing showing a section taken in lines I-I in Fig. 4.
Fig. 7 is an illustrative drawing of the handlebar and the display/operation device.
Fig. 8 is an illustrative drawing showing a handlebar of an electrically assisted bicycle and surroundings according to another embodiment of the present invention.
Fig. 9 is an illustrative drawing showing the display/operation device attached to the handlebar in the embodiment in Fig. 8.
Fig. 10 is an illustrative drawing showing a handlebar and surroundings of an electrically assisted bicycle according to still another embodiment of the present invention.
Fig. 11 is an illustrative drawing showing the display/operation device attached to the handlebar in the embodiment in Fig. 10.

### DETAILED DESCRIPTION OF THE PREFERRED EMBODIMENTS

Hereinafter, preferred embodiments of the present invention will be described with reference to the drawings.

It is noted that the terms left and right, front and rear, up and down as used in the embodiments of the present invention are determined from the bicycle rider's position on a saddle 50 of an electrically assisted bicycle 10, with the rider facing toward a handlebar 32.

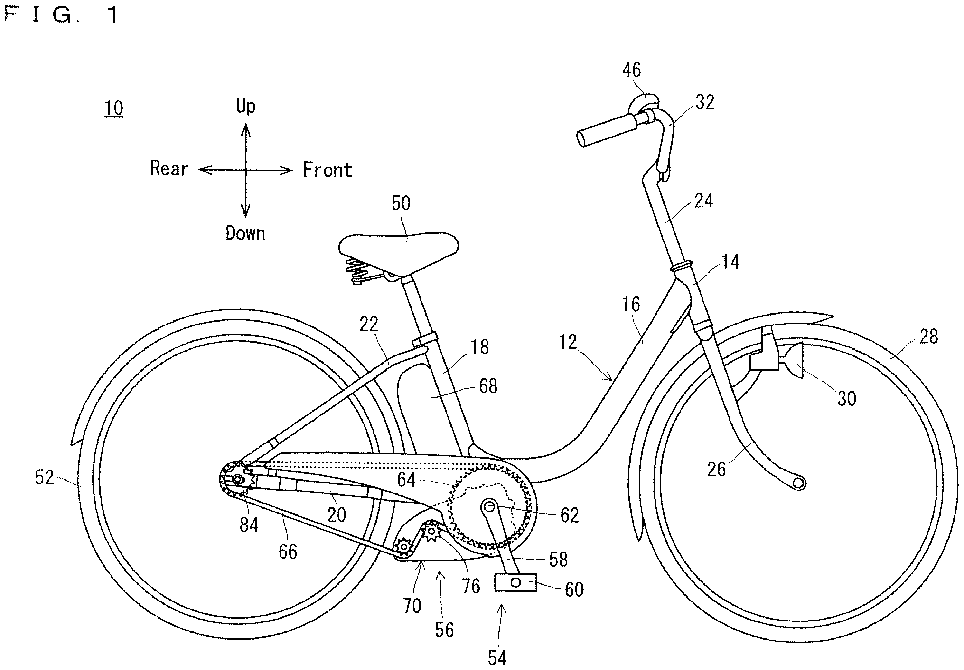

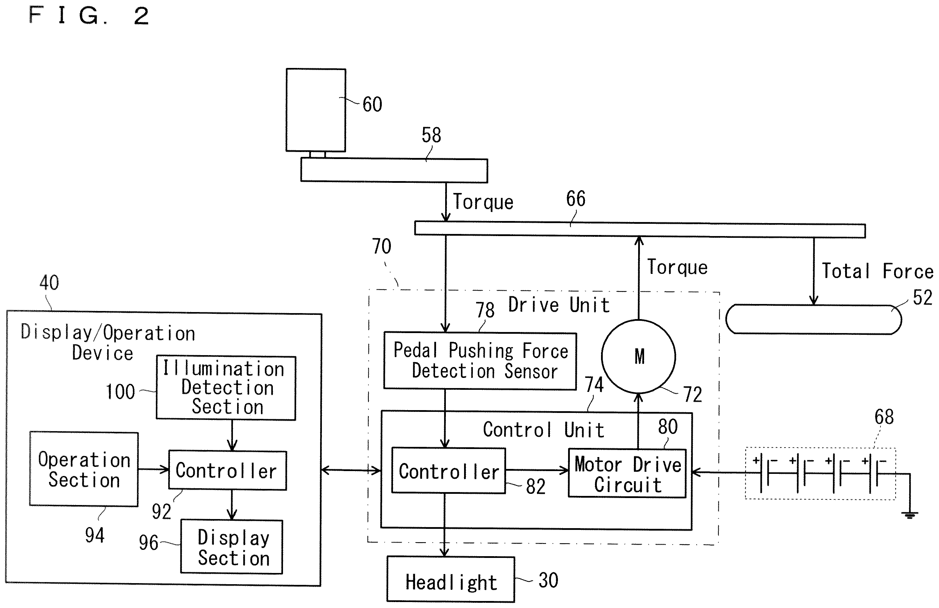

Referring to Fig. 1 and Fig. 2, an electrically assisted bicycle 10 as a saddle type vehicle according to an embodiment of the present invention is a standard-type electrically assisted bicycle, and includes a body frame 12. The body frame 12 includes a head pipe 14; a down tube 16 extending from the head pipe 14 in an obliquely rearward and downward direction; a saddle tube 18 extending from a rear end of the down tube 16 in an obliquely rearward and upward direction; a left-and-right pair of chain stays 20 extending rearward from near a lower end of the saddle tube 18 in a substantially horizontal direction; and a left-and-right pair of saddle stays 22 which connect rearward end portions of the two chain stays 20 to an upper region of the saddle tube 18.

The head pipe 14 supports a stem 24 pivotably in a clockwise/counterclockwise direction. The stem 24 has a lower end, where a front fork 26 is provided, and at a lower end of the front fork 26, a front wheel 28 is supported rotatably. The front fork 26 supports a headlight 30. At an upper end of the stem 24, there is a handlebar 32.

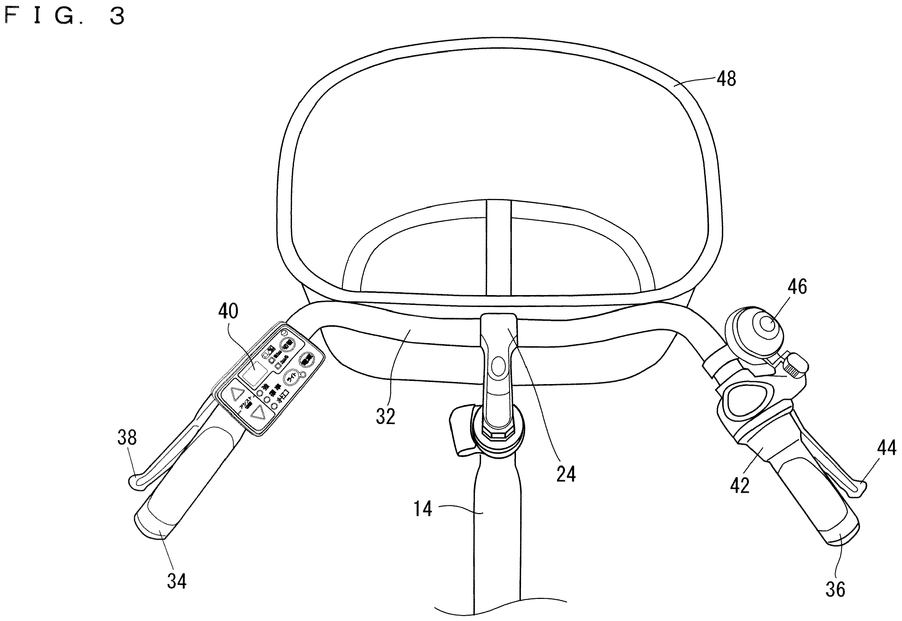

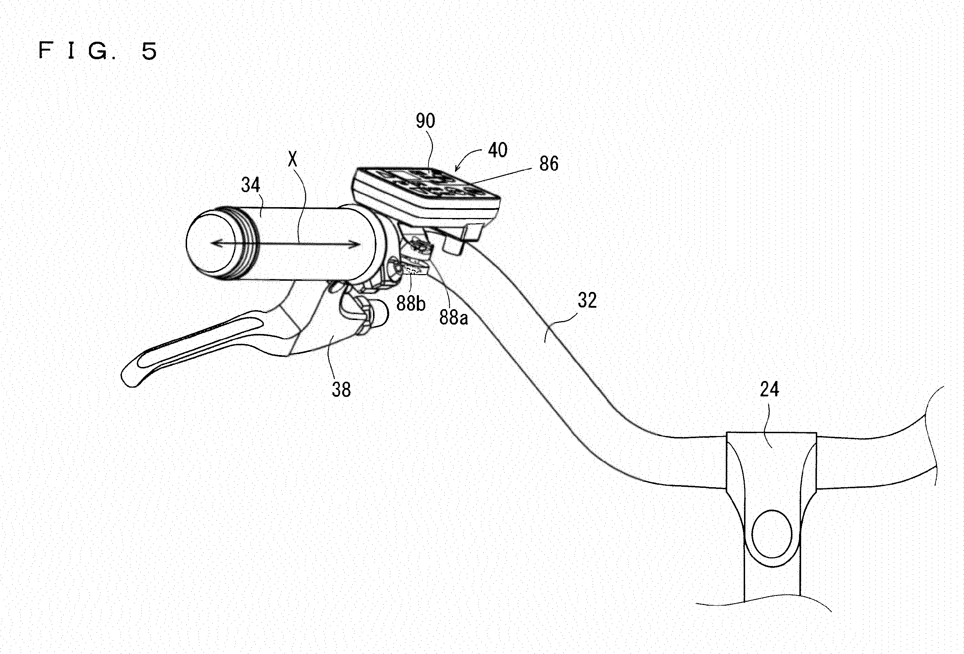

Referring to Fig. 3 through Fig. 5, the handlebar 32 extends substantially horizontally from the stem 24, in two directions (left and right directions) along a width direction of the bicycle, and then obliquely upward and thereafter, opens slightly in obliquely rearward directions. The handlebar 32 has a left end portion and a right end portion, provided with grips 34, 36 respectively. In a left portion of the handlebar 32, near an end portion of the grip 34 closer to the stem, a rear wheel brake lever 38 and a display/operation device 40 are attached in this order. In a right portion of the handlebar 32, near an end portion of the grip 36 closer to the stem, a speed change grip 42, a front wheel brake lever 44 and a bell 46 are attached in this order. In front of the handlebar 32, a basket 48 is provided.

Returning to Fig. 1 and Fig. 2, a saddle 50 is attached to an upper end of the saddle tube 18. The saddle 50 is at a more rearward position than the handlebar 32. A rear wheel 52 is supported rotatably at rear ends of the chain stays 20.

The electrically assisted bicycle 10 includes a man-force driving system 54 and a drive assisting system 56.

The man-force driving system 54 includes crank arms 58; pedals 60 each attached to respective ends of the crank arms 58; a crank shaft 62 provided at other ends of the crank arms 58; and a drive sprocket 64 attached to the crank shaft 62. As the bicycle rider pushes the pedals 60, a pedal pushing force (torque) is supplied to a chain 66 via the crank arms 58, the crank shaft 62 and the drive sprocket 64.

The drive assisting system 56 includes a battery 68 placed between the saddle tube 18 and a front edge of the rear wheel 52; and a drive unit 70. The drive unit 70 includes an electric motor 72; a control unit 74; an assisting sprocket 76; and a pedal pushing force detection sensor 78. The electric motor 72 is placed behind the crank shaft 62. The control unit 74 is attached to the body frame 12. The assisting sprocket 76 is attached to the electric motor 72, and is engaged with the chain 66. The pedal pushing force detection sensor 78 is placed between the crank shaft 62 and the drive sprocket 64 to detect the pedal pushing force (torque) the rider supplies to the crank shaft 62.

The control unit 74 includes a motor drive circuit 80 for driving the electric motor 72, and a controller 82. The controller 82 performs signal communication with a controller 92 (to be described later) of the display/operation device 40, thereby controlling the motor drive circuit 80 and the headlight 30. The controller 82 receives a pedal pushing force detection signal from the pedal pushing force detection sensor 78, and signals from assist mode switching buttons 106a, 106b (to be described later). The controller 82 uses the inputted signals and a control map stored in the controller 82, to calculate a required assisting force, and outputs a motor control signal (for example, PWM output) according to the calculated assisting force to the motor drive circuit 80. The motor drive circuit 80 provides drive control on a drive motor 72 based on the motor control signal, whereby the calculated assisting force is supplied to the chain 66 via the assisting sprocket 76.

The chain 66 is wound around the drive sprocket 64 attached to the crank shaft 62, and around the driven sprocket 84 attached to the rear wheel 52. A total force of the pedal pushing force and the assisting force supplied to the chain 66 is then transferred to the rear wheel 52 via the driven sprocket 84, whereby the rear wheel 52 is rotated.

Description will now cover the display/operation device 40.

As mentioned above, the display/operation device 40 is attached to near the left-hand grip 34 on the handlebar 32. In other words, the display/operation device 40 is disposed at a position which allows the rider to operate an operation section 94 (to be described later) with his/her left hand fingers while his/her left hand is still on the grip 34 or while the left hand, holding on the grip 34, is slightly lifted therefrom.

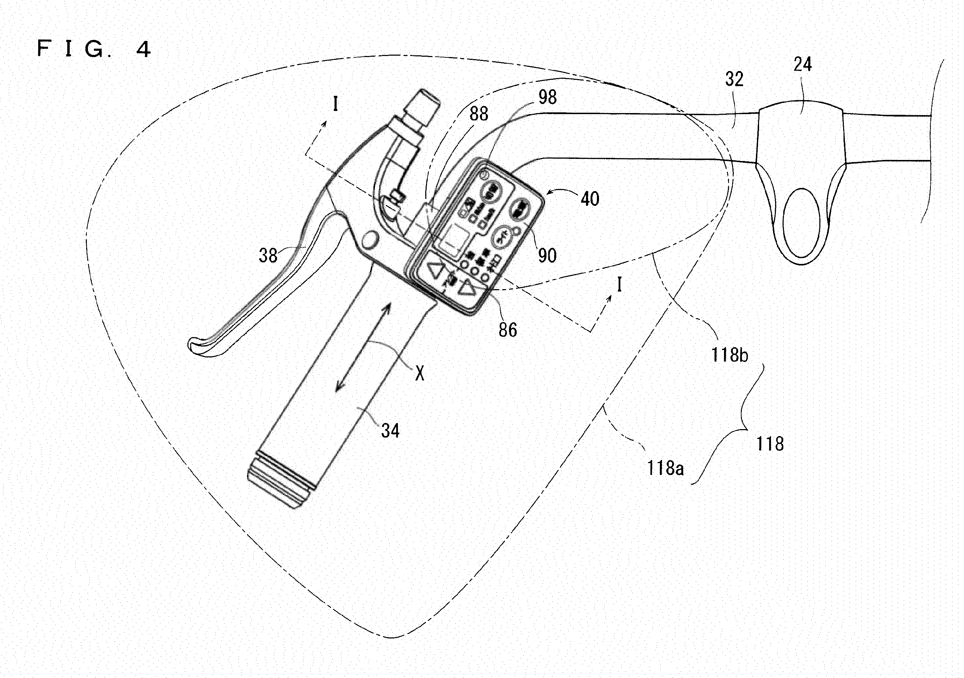

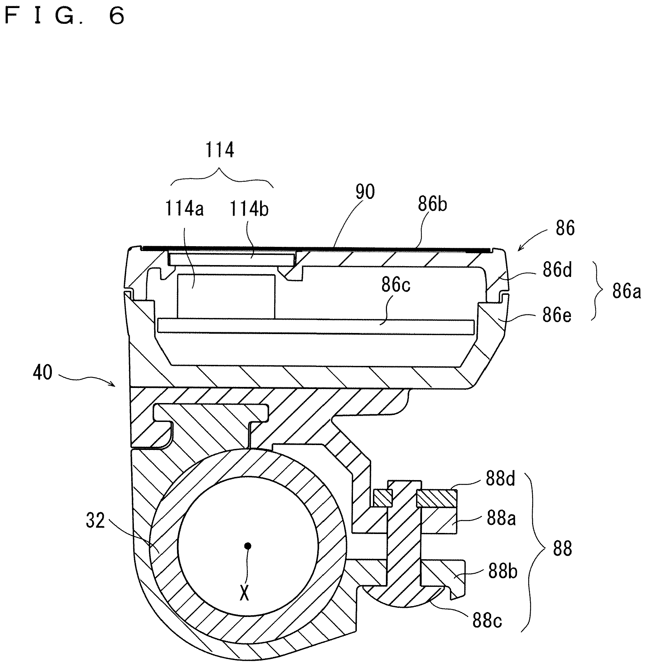

Referring to Fig. 4 through Fig. 6, the display/operation device 40 includes a device main body 86 and a mounting portion 88. The mounting portion 88 is generally annular, provided on the device main body 86, and is attached to the handlebar 32 so as to hold an outer circumferential surface of the handlebar 32. The mounting portion 88 has an upper member 88a; a lower member 88b; and a bolt 88c and a nut 88d as fasteners to connect the upper member 88a and the lower member 88b to each other. The upper member 88a is attached to a lower surface of a case lower portion 86e (to be described later) of the device main body 86. In the present embodiment, the upper member 88a and the case lower portion 86e are formed integrally with each other. The upper member 88a and the lower member 88b are fitted to each other at their first end regions while their second end regions are fastened to each other with the bolt 88c and the nut 88d. The lower member 88b is made of an elastic material for example, and is fitted around the handlebar 32 in an outer circumferential direction of the handlebar 32, to surround approximately 3/4 of the outer circumference (see Fig. 6). An approximate 1/4 of the outer circumference of the handlebar 32 which is not surrounded by the lower member 88b is surrounded by the upper member 88a. As described, the upper member 88a and the lower member 88b surround the outer circumferential surface of the handlebar 32 in the outer circumferential direction, and under this state the upper member 88a and the lower member 88b are fastened together with the bolt 88c and the nut 88d, whereby the device main body 86 (the display/operation device 40) is attached to the handlebar 32.

The device main body 86 is substantially platy and rectangular. Referring to Fig. 6, the device main body 86 includes a case 86a, a protection sheet 86b, and a substrate 86c. The case 86a includes a case upper portion 86d and a case lower portion 86e fitted to the case upper portion 86d. The protection sheet 86b is placed on the case upper portion 86d. The substrate 86c is inside the case 86a. Fig. 6 shows an arrangement inside the case 86a in a simplified fashion. Also, in Fig. 6, an axial direction X is a direction vertically penetrating the paper.

Referring also to Fig. 2, the device main body 86 further includes an operation surface 90, a controller 92, an operation section 94 for operating the drive assisting system 56, a display section 96 for displaying various information, a light-receiving window 98 for letting ambient light enter, and an illumination detection section 100 for detecting illumination in the surrounding environment based on the light from the light-receiving window 98.

The operation surface 90 does not face the handlebar 32. Specifically, the operation surface 90 is formed in an upper surface of the protection sheet 86b, to face upward. The operation surface 90 is substantially rectangular, and has an approximate size of a business card. The operation section 94 is operable (by touching) on the operation surface 90. The display section 96 is visible in the operation surface 90. The light-receiving window 98 is in the operation surface 90 of the device main body 86. The controller 92 and the illumination detection section 100 is provided on the substrate 86c inside the case 86. The operation section 94, the display section 96 and the illumination detection section 100 are electrically connected to the controller 92.

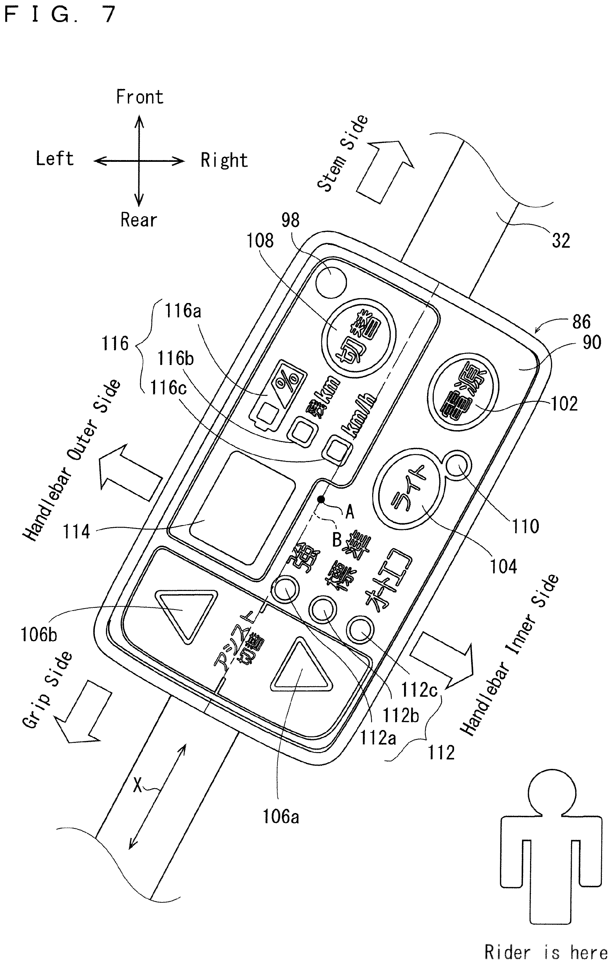

Referring to Fig. 7, the operation section 94 includes a power source button 102 to be turned ON/OFF by the rider, a light button 104, assist mode switching buttons 106a, 106b, and a meter display switching button 108. In the operation surface 90 of the device main body 86, the power source button 102 is disposed on a side closer to the stem, near a corner on an inner side of the handlebar. The light button 104 is disposed next to the power source button 102, on a side closer to the grip. The assist mode switching button 106a is disposed on a side closer to the grip, on the inner side of the handlebar in the operation surface 90 of the device main body 86, whereas the assist mode switching button 106b is disposed on an outer side of the assist mode switching button 106a with respect to the handlebar. In the operation surface 90 of the device main body 86, the meter display switching button 108 is disposed on a side closer to the stem, near a corner on the outer side of the handlebar.

The display section 96 also includes a light mode display section 110, an assist mode display section 112, a meter display section 114, and a display mode display section 116. The light mode display section 110 is disposed closely to the light button 104. The assist mode display section 112 includes a powerful mode display section 112a, a standard mode display section 112b, and an auto-economy mode display section 112c, and is disposed between the assist mode switching button 106a and the light button 104. The meter display section 114 is disposed near the assist mode switching button 106b on a side closer to the stem, near the assist mode display section 112 on the outer side of the handlebar. The display mode display section 116 indicates a type of information displayed in the meter display section 114, includes a remaining battery charge display section 116a, a distance-to-empty display section 116b, and a traveling speed display section 116c, and is disposed between the meter display section 114 and the meter display switching button 108. Referring to Fig. 6, the meter display section 114 includes an LED display section 114a composed, for example, of a plurality of 7-segment LEDs; and a cover lens 114b of a strip-shape for example. The LED display section 114a is on the substrate 86c, whereas the cover lens 114b is between the LED display section 114a and the protection sheet 86b. Also, each of the light mode display section 110, the powerful mode display section 112a, the standard mode display section 112b, the auto-economy mode display section 112c, the remaining battery charge display section 116a, the distance-to-empty display section 116b and the traveling speed display section 116c has an LED (not illustrated) disposed on the substrate 86c and is visible in the operation surface 90.

When the power source button 102 is turned ON, the device enters the auto-light mode first, where the headlight 30 is automatically turned ON/OFF based on illumination in the surrounding environment. If the light button 104 is pressed thereafter, the device enters the manual-light mode. In the manual-light mode, the headlight 30 is switched to ON/OFF each time the light button 104 is pressed. Thereafter, the manual-light mode continues until the power source button 102 is turned OFF. The light mode display section 110 turns ON when the headlight 30 is ON, and turns OFF while the headlight 30 is OFF.

By operating the assist mode switching buttons 106a, 106b, it is possible to switch the assist mode between "powerful mode" in which powerful assistance is provided, "standard mode" in which power and mileage are balanced, "auto-economy mode" in which power saving is prioritized for longer mileage, and "no assistance mode". In accordance with the selection performed, one of the powerful mode display section 112a, the standard mode display section 112b, and the auto-economy mode display section 112c turns ON or all of them turn OFF, to indicate the assist mode selected at that moment. A drive force provided by the electric motor 72 becomes smaller in the order of "powerful mode", "standard mode" and "auto-economy mode", with the pedal pushing force being equal.

By operating the meter display switching button 108, meter display in the meter display section 114 is switched between remaining battery charge, current distance-to-empty, and traveling speed. In accordance with the selection performed, one of the remaining battery charge display section 116a, the distance-to-empty display section 116b and the traveling speed display section 116c turns ON, to indicate the display mode at that moment.

Referring to Fig. 4 through Fig. 7, the light-receiving window 98 is on a side closer to the stem than is a center-of-gravity point A of the operation surface 90 in the axial direction X of the handlebar 32 at a place where the mounting portion 88 is attached. Also, when viewed from a direction vertical to the operation surface 90, the light-receiving window 98 and the saddle 50 (see Fig. 1) are on mutually opposed sides of an imaginary line segment B which is drawn to pass through the center-of-gravity point A and to extend in the axial direction X of the handlebar 32 at the mounting portion 88. Further, at least part of the light-receiving window 98 is on a side closer to the stem than is the operation section 94, i.e., than is the power source button 102 and the meter display switching button 108. In the present embodiment, the light-receiving window 98 is located in a vicinity of the meter display switching button 108. The illumination detection section 100 is placed at a position accessible by light from the light-receiving window 98, typically, on a line which passes through the light-receiving window 98 and is vertical to the operation surface 90.

According to the electrically assisted bicycle 10 described thus far, in which the light-receiving window 98 for allowing ambient light (outside light) to enter is provided in the operation surface 90 of the display/operation device 40 (the device main body 86) in a manner that the operation surface 90 does not face the handlebar 32, the device can receive light easily without being affected by such a factor as light reflectivity of the handlebar 32, unlike in the arrangement where the light-receiving window is formed in the lower surface. Also, the light-receiving window 98 is on a side closer to the stem than is the center-of-gravity point A of the operation surface 90 in the axial direction X of the handlebar 32 at a place where the mounting portion 88 is attached. Namely, the location of the light-receiving window 98 is far from the grip 34 of the handlebar 32. Therefore, even in cases where a handle cover is attached to the grip 34 of the handlebar 32, the light which travels toward the light-receiving window 98 is less likely to be affected by the handle cover, so it is possible to appropriately catch the ambient light. Hence, the illumination detection section 100 can accurately detect ambient illumination, the arrangement reduces influence of noise, making it possible to avoid untimely turning ON of the headlight 30 caused by disturbance.

Further, when viewed from a direction vertical to the operation surface 90, the light-receiving window 98 and the saddle 50 are on mutually opposed sides of an imaginary line segment B which is drawn to pass the center-of-gravity point A and extend in the axial direction X of the handlebar 32 at the mounting portion 88. Specifically, the light-receiving window 98 is on a side closer to the stem than is the center-of-gravity point A of the operation surface 90, and further, when viewed from a direction which is vertical to the operation surface 90, the light-receiving window 98 and the saddle 50 are on the mutually opposed sides of the imaginary line segment B. The position of the light-receiving window 98 as described above belongs to a region which is not very likely to be passed by the rider's finger(s) when he/she operates the display/operation device 40. Therefore, the light which travels to the light-receiving window 98 is not very much affected by the finger(s). Thus, the illumination detection section 100 can accurately detect ambient illumination, the arrangement reduces influence of noise, making it possible to avoid untimely turning ON of the headlight 30 caused by disturbance.

Since at least part of the light-receiving window 98 is on a side closer to the stem than is the operation section 94 of the display/operation device 98, it is possible to position the light-receiving window 98 at a place which is even less likely to be passed by the rider's finger(s) when he/she operates the display/operation device 40, so the arrangement prevents the light-receiving window 98 from being completely blocked by the rider's fingers. Therefore, the arrangement allows the illumination detection section 100 to detect ambient illumination at a higher accuracy.

Fig. 4 show a handle cover 118. A portion thereof, which is close to the grip is made of a cloth 118a so as to protect the rider's hand from cold temperatures, injuries, etc., whereas a portion which is close to the stem is made of a transparent member 118b such as vinyl so that the display section 96 of the display/operation device 40 is visible. Even in cases where the handle cover 118 as described is attached to the handlebar 32, it is easy according to the electrically assisted bicycle 10 to position the light-receiving window 98 correspondingly to the transparent member 118b of the handle cover 118, since the light-receiving window 98 is formed in the operation surface 90 of the display/operation device 40 and is on a side closer to the stem than is the center-of-gravity point A of the operation surface 90. Thus, the light-receiving window 98 is not very much affected by the handle cover 118, is capable of receiving ambient light appropriately, and the illumination detection section 100 can detect ambient illumination accurately. As described, the electrically assisted bicycle 10 can be suitably utilized when a handle cover 118 has a transparent member 118b at a position corresponding to the display section 96.

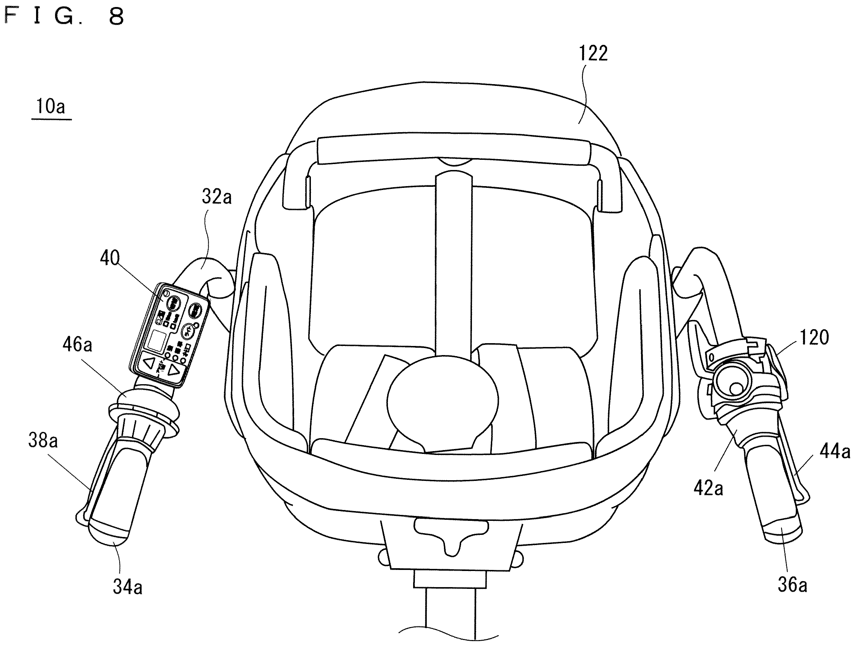

The present invention is also applicable to an electrically assisted bicycle 10a in Fig. 8 which is provided with a child seat.

The electrically assisted bicycle 10a includes a handlebar 32a which extends substantially horizontally from a stem (not illustrated), in two directions (left and right directions) in a width direction of the bicycle, then substantially upward and thereafter substantially rearward. The handlebar 32a has a left end portion and a right end portion, provided with grips 34a, 36a respectively. In a left portion of the handlebar 32a, near an end portion of the grip 34a which is closer to the stem, there are a bell 46a, a rear wheel brake lever 38a and a display/operation device 40 attached in this order. In a right portion of the handlebar 32a, near an end portion of the grip 36a on the side closer to the stem, a speed-changer grip 42a, a front wheel brake lever 44a, and an operation lever 120 for locking the handlebar 32a are attached in this order. A child seat 122 is provided between a left and a right portions of the handlebar 32a.

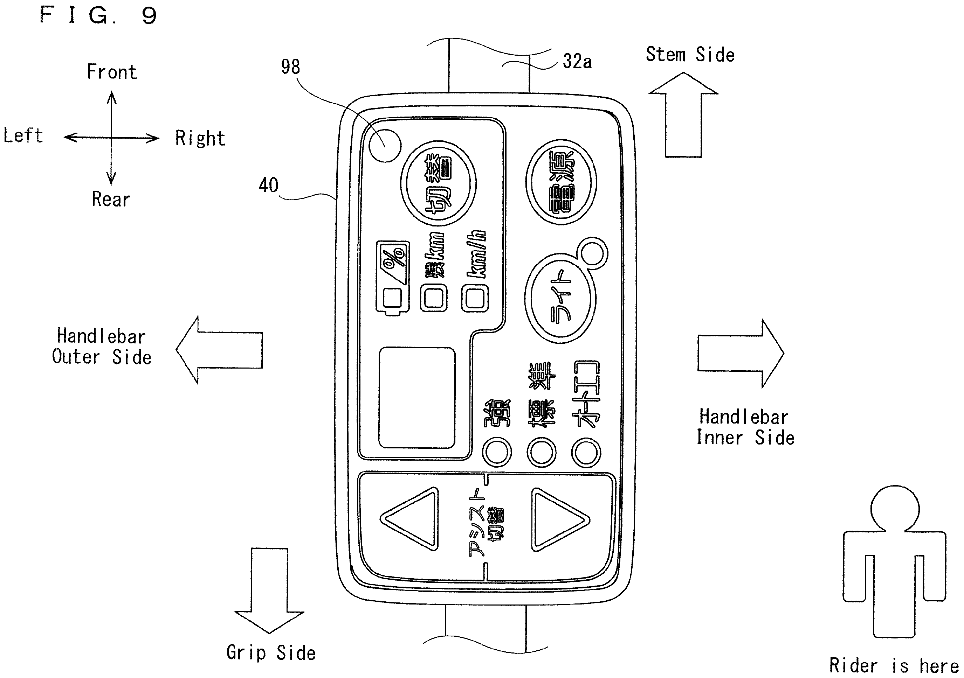

In the electrically assisted bicycle 10a, the display/operation device 40 is attached to a portion in a left half of the handlebar 32a where the handlebar 32a extends substantially in the fore-aft direction of the bicycle. Specifically, the display/operation device 40 is attached generally as shown in Fig. 9. The present embodiment provides the same advantages as achieved by the electrically assisted bicycle 10 shown in Fig. 1.

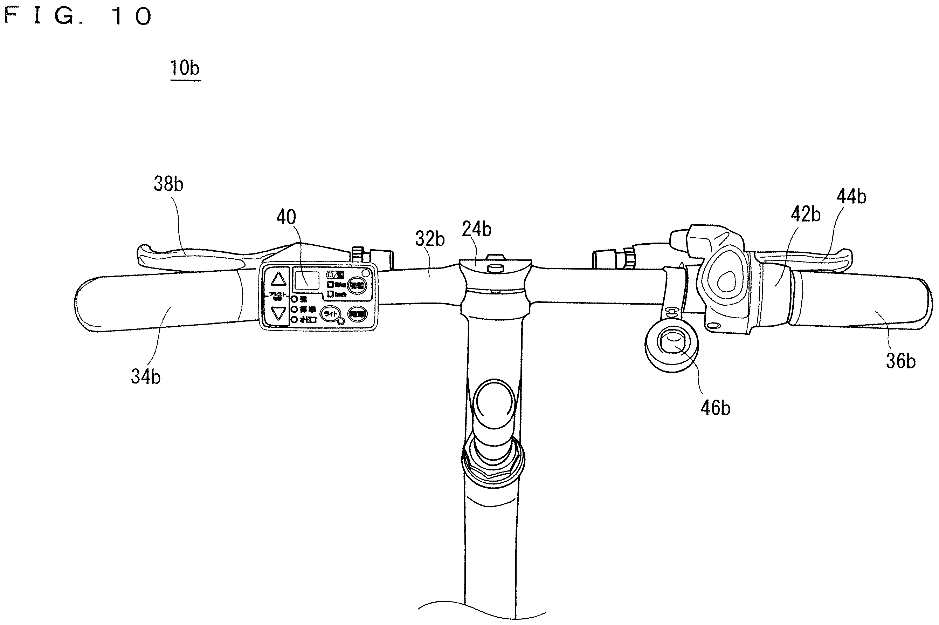

Further, the present invention is also applicable to a sporty-type electrically assisted bicycle 10b shown in Fig. 10.

The electrically assisted bicycle 10b includes a handlebar 32b which is formed in a shape like a letter I and extends substantially horizontally from a stem 24b, in two directions (left and right directions) in a width of the bicycle. The handlebar 32b has a left end portion and a right end portion, provided with grips 34b, 36b respectively. In a left portion of the handlebar 32b, near an end portion of the grip 34b which is closer to the stem, there are a rear wheel brake lever 38b and the display/operation device 40 attached in this order. In a right portion of the handlebar 32b, near an end portion of the grip 36b on the side closer to the stem, a speed change grip 42b, a front wheel brake lever 44b and a bell 46b are attached in this order.

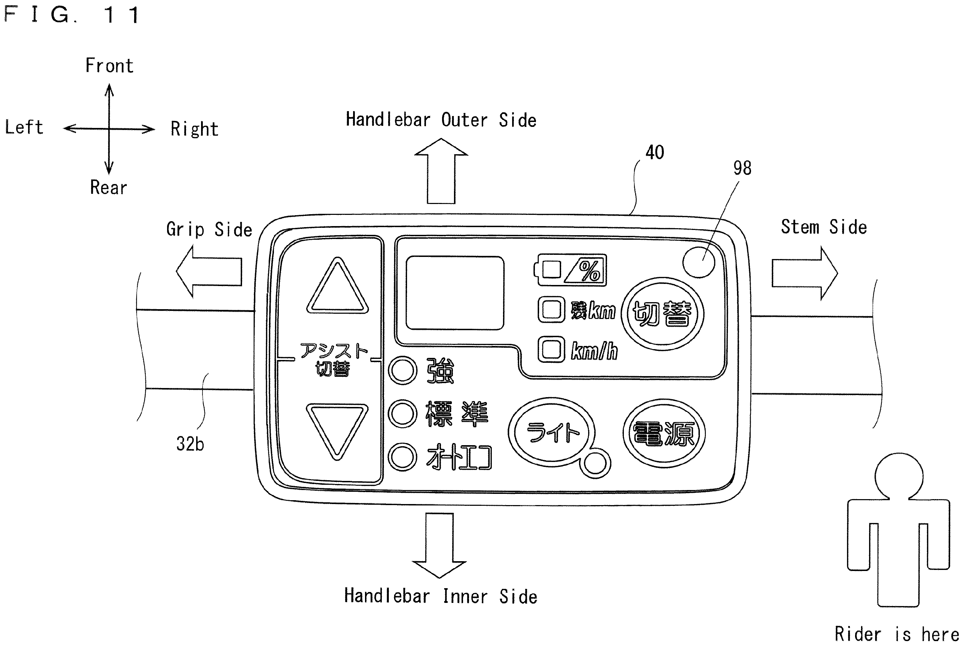

In the electrically assisted bicycle 10b, the display/operation device 40 is attached to a portion in a left half of the handlebar 32b where the handlebar 32b extends substantially in the width direction of the bicycle. Specifically, the display/operation device 40 is attached generally as shown in Fig. 11. The present embodiment also provides the same advantages as achieved by the electrically assisted bicycle 10 shown in Fig. 1.

In the embodiment described above, description was made for a case where the electrically assisted bicycle 10 includes a display/operation device 40 which has an operation section 94 and a display section 96. However, the present invention is not limited to this. The present invention is also applicable to an electrically assisted bicycle in which the operation device and the display device are provided separately from each other.

In the embodiment described above, the display/operation device 40 is attached near the left-hand grip 34 (34a, 34b) of the handlebar 32. However, the present invention is not limited to this. For example, the display/operation device 40 may be attached near the right-hand grip 36 (36a, 36b) of the handlebar 32.

The present invention is also applicable to a type of electrically assisted bicycle in which the drive force from the electric motor is directly transferred to the crank shaft 62 to assist rotating movement of the crank shaft 62. Further, the present invention is also applicable to another type of electrically assisted bicycle in which the electric motor is mounted directly to the wheel (the front wheel 28 and/or the rear wheel 52) to assist rotating movement of the wheel.

The present invention being thus far described in terms of preferred embodiments, it is obvious that these may be varied in many ways within the scope of the present invention. The scope of the present invention is only limited by the accompanied claims.

## Claims

1. An electrically assisted bicycle (10) including a drive assisting system (56), comprising:
a stem (24);
a handlebar (32) including grips (34, 36) and extending from the stem (24) in a width direction of the bicycle (10); and
an operation device (40) attached near to one grip (34, 36) including a device main body (86) and a mounting portion (88) provided in the device main body (86) and attached to the handlebar (32) to hold an outer circumferential surface of the handlebar (32);
wherein the device main body (86) includes: an operation surface (90) not facing the handlebar (32); an operation section (94) for operating the drive assisting system (56);
**characterised in that** the device main body (86) further includes:
a light-receiving window (98) in the operation surface (90) for letting ambient light enter; and an illumination detection section (100) which detects illumination in a surrounding environment based on the light from the light-receiving window (98); and
wherein the light-receiving window (98) is on a side closer to the stem (24) than is a geographic center-of-gravity point (A) of the operation surface (90) with respect to an axial direction of the handlebar (32) at a location where the mounting portion (88) is attached.

2. The electrically assisted bicycle (10) according to claim 1, further comprising a saddle (50) provided at a more rearward position than the handlebar (32),
wherein the light-receiving window (98) and the saddle (50) are on mutually opposed sides of an imaginary line segment which passes the center-of-gravity point (A) and extends in an axal direction (X) of the handlebar (32) at a location where the mounting portion (88) is attached, when viewed from a direction vertical to the operation surface (90).

3. The electrically assisted bicycle (10) according to claim 1 or 2, wherein at least part of the light-receiving window (98) is on a side closer to the stem (24) than is the operation section (94).

4. The electrically assisted bicycle (10) according to one of claims 1 through 3, wherein the operation device (40) is provided by a display/operation device (40) which further includes a display section (96).

## Patentansprüche

1. Ein elektrisch unterstütztes Fahrrad (10) inklusive eines Antriebsassistenzsystems (56), aufweisend:
einen Vorbau (24);
einen Lenker (32) inklusive Griffe (34, 36) und erstreckend von dem Vorbau (24) in einer Breitenrichtung des Fahrrads (10), und
einer Bedienungsvorrichtung (40), die nahe an einem Griff (34, 36) angebracht ist, inklusive eines Vorrichtungshauptkörpers (86) und eines Montageabschnitts (88), bereitgestellt in dem Vorrichtungshauptkörper (86) und am Lenker (32) befestigt, um eine äußere Umfangsfläche des Lenkers (32) zu halten;
wobei der Vorrichtungshauptkörper (86) aufweist: eine Bedienungsoberfläche (90), die nicht im Angesicht zum Lenker (32) steht, eine Bedienungssektion (94) zum Bedienen des Antriebsassistenzsystems (56),
**dadurch gekennzeichnet, dass** der Vorrichtungshauptkörper (86) weiter aufweist:
ein Lichtempfangsfenster (98) in der Bedienungsoberfläche (90) zum Hereinlassen von Umgebungslicht,
und einer Beleuchtungsdetektiersektion (100), die die Beleuchtung in einer umliegenden Umgebung basierend auf Licht von dem Lichtempfangsfenster (98) detektiert, und
wobei das Lichtempfangsfenster (98) an einer Seite dichter zum Vorbau (24) angeordnet ist als ein geografischer Schwerpunkt (A) der Bedienungsoberfläche (90) in Bezug zu einer Axialrichtung des Lenkers (32) an einer Stelle, wo der Montageabschnitt (88) angebracht ist.

2. Das elektrisch unterstützte Fahrrad (10) gemäß Anspruch 1, weiter aufweisend einen Sattel (50), der an einer Position weiter hinten in Bezug zum Lenker (32) vorgesehen ist,
wobei das Lichtempfangsfenster (98) und der Sattel (50) an einem imaginären Liniensegment gegenseitig gegenüberstehen, welches den Schwerpunkt (A) passiert und sich in einer Axialrichtung (X) des Lenkers (32) an einer Stelle erstreckt, bei dem der Montageabschnitt (88) angebracht ist, wenn dies von einer Richtung vertikal zur Bedienungsoberfläche (90) betrachtet wird.

3. Das elektrisch unterstützte Fahrrad (10) gemäß einem der Ansprüche 1 oder 2, wobei zumindest ein Teil des Lichtempfangsfensters (98) an einer Seite ist, näher zum Vorbau (24) als die Bedienungssektion (94).

4. Das elektrisch unterstützte Fahrrad (10) gemäß einem der Ansprüche 1 bis 3, wobei die Bedienungsvorrichtung (40) mittels eines Display/Bedienungsvorrichtung (40) bereitgestellt ist, welches weite eine Anzeigesektion (96) aufweist.

## Revendications

1. Bicyclette à assistance électrique (10) incluant un système d'assistance d'entraînement (56), comprenant :
une potence (24) ;
un guidon (32) comprenant des poignées (34, 36) et s'étendant depuis la potence (24) en direction de la largeur de la bicyclette (10) ; et
un dispositif de commande (40) attaché près d'une poignée (34, 36) comprenant un corps principal de dispositif (86) et une portion de montage (88) pourvue dans le corps principal de dispositif (86) et attachée au guidon (32) pour saisir une surface circonférentielle externe du guidon (32) ;
dans laquelle le corps principal de dispositif (86) comprend : une surface de commande (90) qui ne fait pas face au guidon (32) ; une section de commande (94) pour commander le système d'assistance d'entraînement (56) ;
**caractérisée en ce que** le corps principal de dispositif (86) comprend en outre :
une fenêtre de réception de lumière (98) dans la surface de commande (90) pour laisser entrer la lumière ambiante ; et une section de détection d'illumination (100) qui détecte l'illumination dans l'environnement sur base de la lumière provenant de la fenêtre de réception de lumière (98) ; et
dans laquelle la fenêtre de réception de lumière (98) se trouve sur un côté plus proche de la potence (24) qu'un point de centre de gravité géographique (A) de la surface de commande (90) par rapport à une direction axiale du guidon (32) à un emplacement où la portion de montage (88) est attachée.

2. Bicyclette à assistance électrique (10) selon la revendication 1, comprenant en outre une selle (50) pourvue à une position plus en arrière que le guidon (32),
dans laquelle la fenêtre de réception de lumière (98) et la selle (50) se trouvent sur des côtés mutuellement opposés d'un segment de ligne imaginaire qui passe par le point de centre de gravité (A) et qui s'étend en direction axiale (X) du guidon (32) à un emplacement où la portion de montage (88) est attachée, vu selon une direction verticale à la surface de commande (90).

3. Bicyclette à assistance électrique (10) selon la revendication 1 ou 2, dans laquelle au moins une partie de la fenêtre de réception de lumière (98) se trouve sur un côté plus proche de la potence (24) que la section de commande (94).

4. Bicyclette à assistance électrique (10) selon l'une des revendications 1 à 3, dans laquelle le dispositif de commande (40) est pourvu par un dispositif d'affichage / de commande (40) qui comprend en outre une section d'affichage (96) .
